# EUROPEAN PATENT SPECIFICATION

(11) **EP 1 454 817 B1**
(45) Date of publication and mention of the grant of the patent: **26.10.2005**
(21) Application number: 03005112.2
(22) Date of filing: 07.03.2003
(51) Int. Cl.: B62D 21/11

(54) **Motor-vehicle having an anti-noise frame carrying the engine and suspension units**
Kraftfahrzeug mit schalldämpfendem Rahmen zum Stützen des Motors und der Aufhängung
Véhicule automobile avec structure d'amortissement du bruit pour le support du moteur et de la suspension

(43) Date of publication of application: 08.09.2004
(73) Proprietor: C.R.F. Società Consortile per Azioni, 10043 Orbassano (Torino) (IT)
(72) Inventor: Cappo, Roberto, 10043 Orbassano (Torino) (IT); De Stefano, Dino, 10043 Orbassano (Torino) (IT); Frigo, Guido, 10043 Orbassano (Torino) (IT); Fuganti, Antonio, 10043 Orbassano (Torino) (IT); Masoero, Giorgio, 10043 Orbassano (Torino) (IT); Perello, Gianluigi, 10043 Orbassano (Torino) (IT); Pisino, Enrico, 10043 Orbassano (Torino) (IT); Urbinati, Maurizio, 10043 Orbassano (Torino) (IT)
(74) Representative: Notaro, Giancarlo

(56) References cited:
- EP-A- 0 278 479
- DE-A- 19 524 758
- GB-A- 706 025
- US-A- 4 057 120
- US-A- 5 280 967
- US-B1- 6 390 224

## Description

The present invention relates to motor vehicles and, in particular, to motor cars.

In a motor car of the traditional type, the body supports the engine unit by means of the interposition of suspension supports, typically vibration-damping rubber supports, having among other things the purpose of damping the vibrations of the engine unit during operation thereof. Also the suspension unit is connected to the body of the motor vehicle by means of suspension supports. From DE 195 24 758 A there is known a motor vehicle according to the preamble of claim 1.

The purpose of the present invention is to improve the known structure described above, with the aim of reducing the noise inside the passenger compartment of the motor vehicle deriving from the vibrations transmitted to the body by the engine and by the suspension unit associated thereto while the motor vehicle is travelling.

In order to achieve the above purpose, the subject of the invention is a motor vehicle. Having the features of claim 1.

Consequently, as compared to the traditional solution, the invention envisages a double filtering of the vibrations transmitted by the engine and by the road, via the suspension, since there are provided a first set of suspension supports between the engine unit and the auxiliary frame, as well as between the suspension unit and the auxiliary frame, and a second set of suspension supports between the auxiliary frame and the body.

Studies and tests conducted by the present applicant have shown that the advantage of noise reduction inside the passenger compartment of the motor vehicle is considerable.

The structure of the suspension supports is not described in detail herein, since it can be obtained in any known way. Said supports may be conventional vibration-damping rubber supports, or else hydraulic damping supports, or else adaptive suspension supports, designed to operate according to different elastic and damping characteristics, or else electrically controlled active suspension supports, which can be adjusted in a continuous way in order to assume an infinite number of different possible elastic and damping characteristics.

In a preferred embodiment, the aforesaid auxiliary frame has a tubular reticular structure. Preferably, said structure includes two sides connected to one another by cross members, specifically at least one bottom front cross member, one bottom rear cross member and one top rear cross member, each of said cross members carrying at its ends respective suspension supports for installation on the body. The aforesaid auxiliary frame in turn has connection parts of the suspension supports for installation of the engine unit and of the suspension.

A further advantage of the present invention lies in the fact that both the engine unit and the suspension unit can be pre-assembled on the aforesaid auxiliary frame so as to form an assembly, which is then assembled on the body with a single operation. The auxiliary frame can also be made up of two or more sub-frames joined together, for example with screws. In this case the engine and the suspension may be both pre-assembled just on one of the sub-frames that constitute the auxiliary frame.

Further characteristics and advantages of the invention will emerge from the ensuing description with reference to the annexed drawings, which are provided purely by way of non-limiting example and in which:

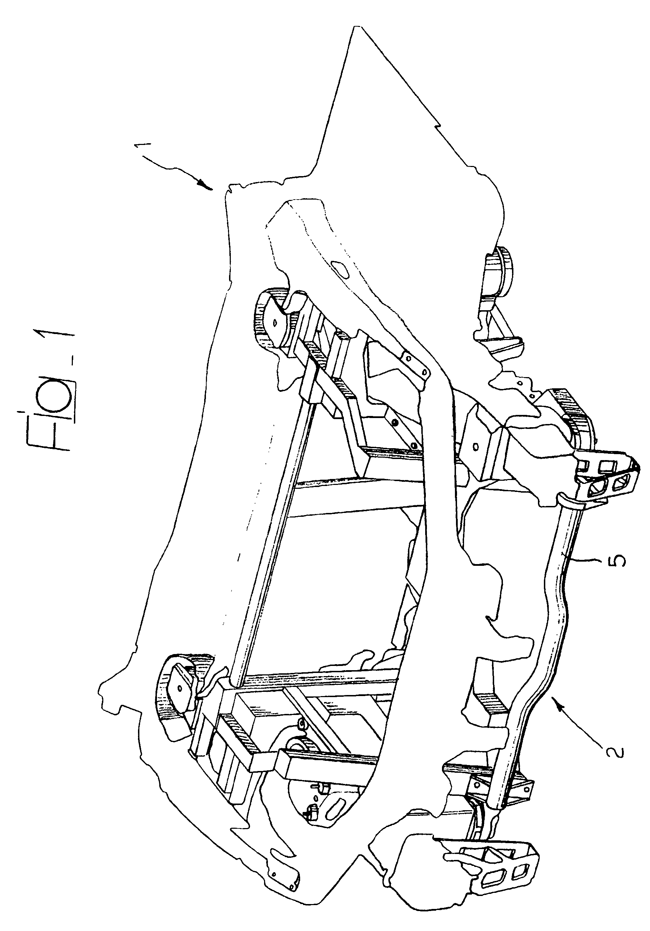

- Figure **1** is a perspective view of a front portion of a body of a motor car with the auxiliary frame according to the present invention mounted thereon;
- Figures **2** and **3** are perspective views which illustrate the auxiliary frame according to the invention with the engine unit and the suspension unit, respectively, installed thereon;
- Figure **4** is a perspective view illustrating the body of the motor car with the auxiliary frame, the engine unit and the suspension unit, all assembled thereon; and
- Figures **5, 6, 7** and **8** are diagrams illustrating the advantages in terms of noise reduction and maintenance of the characteristics of handling of the motor vehicle according to the invention.

With reference to the annexed drawings, the body 1 of a motor vehicle receives in the area of the engine compartment an auxiliary frame 2 formed by a tubular reticular structure made of metal material. In the example of embodiment illustrated, the structure 2 comprises two sides 3, 4 joined at the front by a bottom cross member 5 and at the rear by a top cross member 6 and a bottom cross member 7. Set adjacent to the ends of each of the cross members 5, 6, 7 are suspension supports 8, 9; 10, 11 and 12, 13 for mounting the auxiliary frame 3 on the body 1. The structure of the suspension supports is not described in detail herein, since it can be built in any known way. Said supports may be conventional vibration-damping rubber supports, or else damping hydraulic supports, or else adaptive suspension supports, designed to operate according to different elastic and damping characteristics, or else electrically controlled active suspension supports which can be continuously adjusted in order to assume an infinite number of different possible elastic and damping characteristics.

The engine unit of the motor car, designated as a whole by the reference number 14, is mounted on the auxiliary frame 2 with the interposition of suspension supports 15 (see Figure 2). Likewise, the suspension unit, which includes the hubs of the two front wheels R with the corresponding drive axle shafts 151 (the example illustrated relates to the case of a motorcar with front engine and front-wheel drive), the linkage of the steering wheel 16, the oscillating arms 17 which control the movement of oscillation of the wheels, and the spring/shock-absorber assemblies 18 all envisage attachment points set directly on the auxiliary frame 2. Also in this case, the details of construction of the components of the suspension are not described herein, in so far as they could be obtained in any known way.

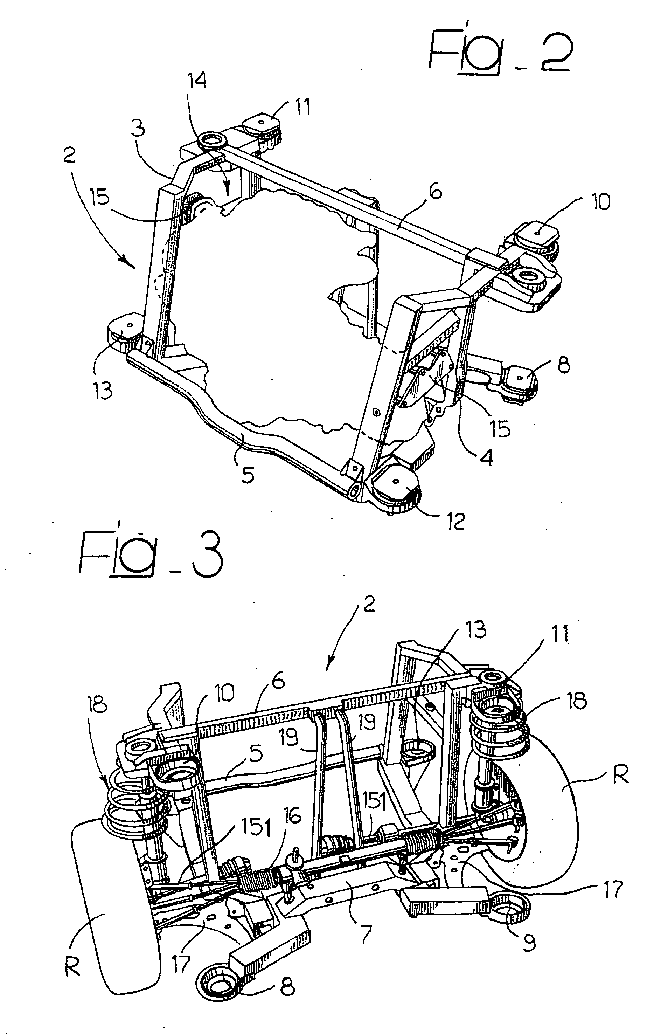

With reference once again to the example of embodiment of the structure of the auxiliary frame 2, as can be clearly seen from Figure 3, the two rear cross members 6, 7 are connected together by means of two central vertical tie-rods 19.

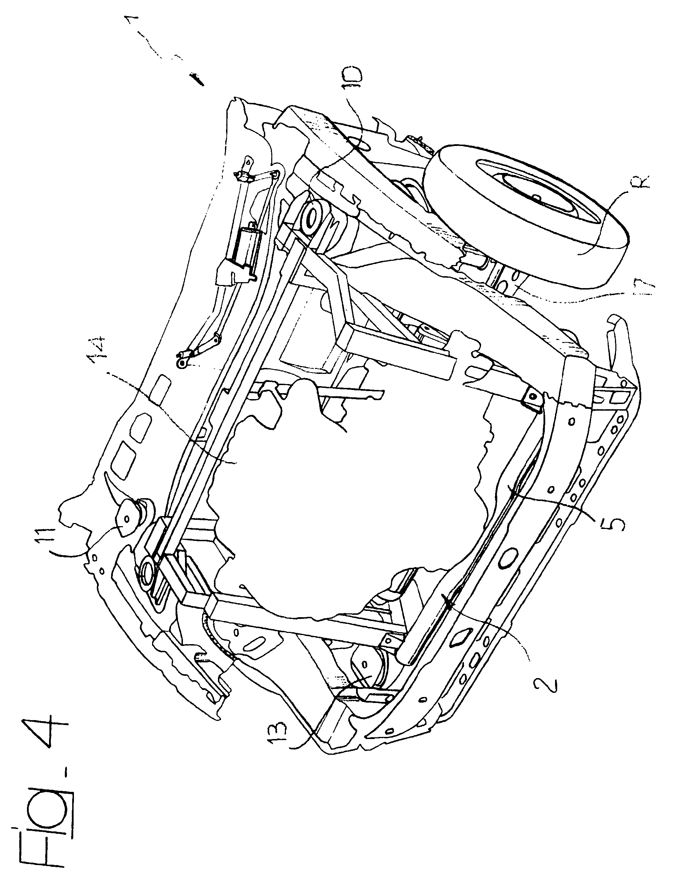

Figure 4 shows the unit of the frame with the engine 14 and the suspension assembled thereon, mounted inside the engine compartment defined by the body 1.

Studies and tests conducted by the present applicant have shown that the solution described above enables a considerable reduction of noise inside the passenger compartment of the motor vehicle on account of the double filtering of the vibrations transmitted both by the road through the suspension, while the motor vehicle is travelling, and by the engine, during running of the latter.

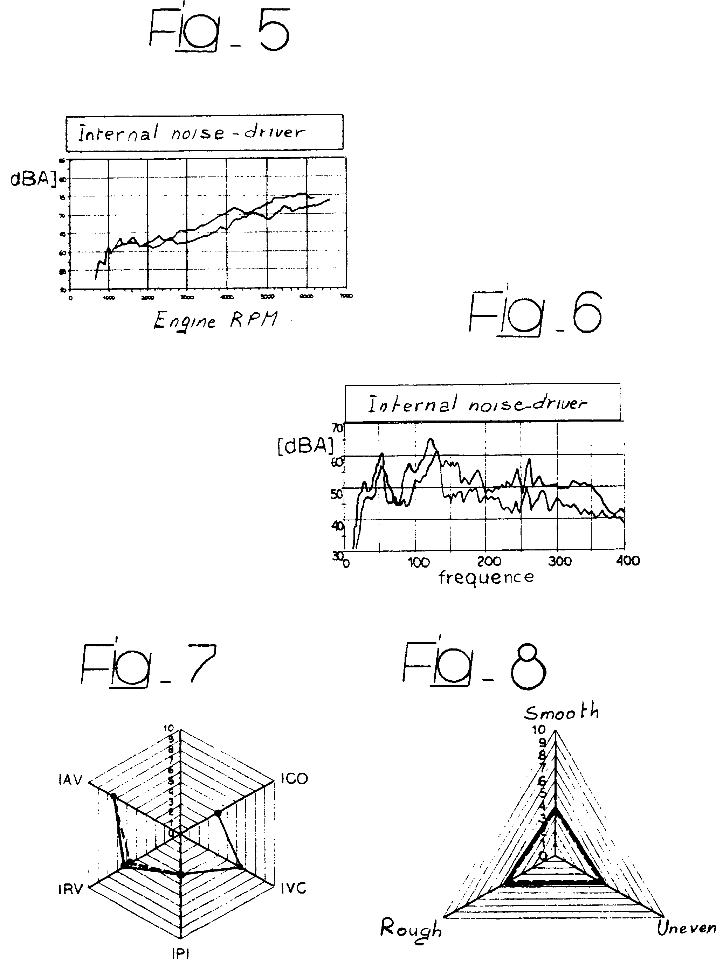

Figure 5 illustrates a diagram of the variation of the internal noise as the r.p.m. of the engine varies. The top line of the diagram refers to a traditional motorcar, whereas the bottom line refers to a similar motorcar modified according to the invention. The diagram of Figure 5 shows how, during acceleration, the noise deriving from the engine is reduced by 4-6 dBA.

The diagram of Figure 6 shows the noise reduction (the top line refers to a traditional motor car, whereas the bottom line refers to the same motor car modified according to the invention) transmitted by the vibrations caused by a rough road surface (cobblestones) as the frequency of the vibrations varies. In practice, a reduction of 5-6 dBA is found, in the case of the motorcar travelling on a cobblestone road surface at 50 kilometres per hour.

Figures 7 and 8 are diagrams in themselves of a known type, which are used by persons skilled in the sector, such as indices of vehicle handling and riding comfort. In both cases, the lines corresponding to the traditional motorcar and to the motorcar according to the invention substantially coincide. Consequently, the reduction in noise is accompanied by a maintenance of the characteristics of vehicle handling and riding comfort of the motor car.

Of course, without prejudice to the principle underlying the invention, the details of construction and embodiments may vary widely with respect to what is described and illustrated herein purely by way of example, without thereby departing from the scope of the present invention as defined by the appended claims.

## Claims

1. A motor vehicle, comprising
- a body (1),
- an auxiliary frame (2), which is mounted on the body (1),
- an engine unit (14) and a suspension unit (16,17,18),
**characterized in that** the engine unit (14) and the suspension unit (16, 17 ,18) are both mounted on the auxiliary frame (2) with the interposition of a first set of suspension supports (15),
and that said auxiliary frame (2) is mounted on the body (1) with the interposition of a second set of suspension supports (8-13),
whereby the vibrations of the engine unit (14) and the suspension unit (16,17,18) during use of the vehicle are transmitted to the body (1) of the vehicle after a double filtering by said first set and said second set of suspension supports.

2. The motor vehicle according to Claim 1, **characterized in that** the aforesaid auxiliary frame (2) has a tubular reticular structure.

3. The motor vehicle according to Claim 2, **characterized in that** the auxiliary frame (2) has two sides (3, 4) connected to one another by means of cross members (5, 6, 7).

4. The motor vehicle according to Claim 3, **characterized in that** said auxiliary frame (2) comprises at least one bottom front cross member (5) and, at the rear, one top cross member (6) and one bottom cross member (7), each of said cross members bearing adjacent to the ends thereof respective suspension supports (8, 9, 10, 11, 12, 13) for installation on the body (1).

5. The motor vehicle according to any one of the preceding claims, **characterized in that** said suspension supports are of a type chosen from among: conventional vibration-damping rubber supports, damping hydraulic supports, adaptive suspension supports designed to operate according to different elastic and damping characteristics, and electrically controlled active suspension supports which can be adjusted in a continuous way to assume an infinite number of different possible elastic and damping characteristics.

6. The motor vehicle according to Claim 1, **characterized in that** the aforesaid auxiliary frame (2) is constituted by two or more sub-frames joined together.

7. The motor vehicle according to Claim 6, **characterized in that** the sub-frames are joined together by means of screws.

8. The motor vehicle according to Claim 1, **characterized in that** the aforesaid auxiliary frame (2) is pre-arranged for receiving thereon the engine unit and the suspension unit prior to its being mounted on the body of the motor vehicle.

9. The motor vehicle according to Claim 6, **characterized in that** one of the aforesaid sub-frames is pre-arranged for receiving thereon the engine unit and the suspension unit prior to its being mounted on the body of the motor vehicle.

## Patentansprüche

1. Motorfahrzeug, umfassend
- einen Körper (1),
- einen Hilfsrahmen (2), der an dem Körper (1) montiert ist,
- eine Motoreinheit (14) und eine Aufhängungseinheit (16, 17, 18),
**dadurch gekennzeichnet, dass** die Motoreinheit (14) und die Aufhängungseinheit (16, 17, 18) beide an dem Hilfsrahmen (2) mit Einlegung eines ersten Satzes von Aufhängungslagern (15) montiert sind, und
dass der Hilfsrahmen (2) an dem Körper (1) mit Einlegung eines zweiten Satzes von Aufhängungslagern (8-13) montiert ist,
wobei die Vibrationen der Motoreinheit (14) und der Aufhängungseinheit (16, 17, 18) während des Gebrauchs des Fahrzeugs auf den Körper (1) des Fahrzeugs nach einem doppelten Filtern durch den ersten Satz und den zweiten Satz von Aufhängungslagern übertragen werden.

2. Motorfahrzeug nach Anspruch 1, **dadurch gekennzeichnet, dass** der Hilfsrahmen (2) eine röhrenförmige, netzartige Struktur besitzt.

3. Motorfahrzeug nach Anspruch 2, **dadurch gekennzeichnet, dass** der Hilfsrahmen (2) zwei Seiten (3, 4) besitzt, die miteinander mittels Querelementen (5, 6, 7) verbunden sind.

4. Motorfahrzeug nach Anspruch 3, **dadurch gekennzeichnet, dass** der Hilfsrahmen (2) mindestens ein unteres, vorderes Querelement (5) und auf der Rückseite ein oberes Querelement (6) und ein unteres Querelement (7) aufweist, wobei jedes der Querelemente benachbart zu seinen Enden jeweilige Aufhängungslager (8, 9, 10, 11, 12, 13) zum Einbau an dem Körper (1) lagert.

5. Motorfahrzeug nach einem der vorhergehenden Ansprüche, **dadurch gekennzeichnet, dass** die Aufhängungslager von einer Art sind, die ausgewählt ist aus: herkömmliche, vibrationsdämpfende Gummilager, dämpfende Hydrauliklager, adaptive Aufhängungslager, die dazu ausgelegt sind, entsprechend unterschiedlicher elastischer und dämpfender Eigenschaften zu arbeiten, und elektrisch gesteuerte, aktive Aufhängungslager, die auf kontinuierliche Weise eingestellt werden können, um eine unbegrenzte Anzahl unterschiedlicher, möglicher elastischer und dämpfender Eigenschaften anzunehmen.

6. Motorfahrzeug nach Anspruch 1, **dadurch gekennzeichnet, dass** der Hilfsrahmen (2) durch zwei oder mehr Nebenrahmen gebildet ist, die miteinander verbunden sind.

7. Motorfahrzeug nach Anspruch 6, **dadurch gekennzeichnet, dass** die Nebenrahmen miteinander durch Schrauben verbunden sind.

8. Motorfahrzeug nach Anspruch 1, **dadurch gekennzeichnet, dass** der Hilfsrahmen (2) vorbereitet ist, um daran die Motoreinheit und die Aufhängungseinheit aufzunehmen, bevor er an dem Körper des Fahrzeugs montiert wird.

9. Motorfahrzeug nach Anspruch 6, **dadurch gekennzeichnet, dass** einer der Nebenrahmen vorbereitet ist, um daran die Motoreinheit und die Aufhängungseinheit aufzunehmen, bevor er an dem Körper des Fahrzeugs montiert wird.

## Revendications

1. Véhicule automobile, comprenant :
-- une carrosserie (1),
-- un cadre auxiliaire (2) qui est monté sur la carrosserie (1),
-- une unité à moteur (14) et une unité de suspension (16, 17, 18),
**caractérisé en ce que** l'unité à moteur (14) et l'unité de suspension (16, 17, 18) sont toutes deux montées sur le cadre auxiliaire (2) avec interposition d'un premier groupe de supports de suspension (15),
et **en ce que** ledit cadre auxiliaire (2) est monté sur la carrosserie (1) avec interposition d'un second groupe de supports de suspension (8-13),
grâce à quoi les vibrations de l'unité à moteur (14) et de l'unité de suspension (16, 17, 18) pendant l'utilisation du véhicule sont transmises à la carrosserie (1) du véhicule après double filtration par ledit premier groupe et par ledit second groupe de supports de suspension.

2. Véhicule automobile selon la revendication 1, **caractérisé en ce que** le cadre auxiliaire précité (2) a une structure réticulaire tubulaire.

3. Véhicule automobile selon la revendication 2, **caractérisé en ce que** le cadre auxiliaire (2) comprend deux côtés (3, 4) connectés l'un à l'autre au moyen de traverses (5, 6, 7).

4. Véhicule automobile selon la revendication 3, **caractérisé en ce que** ledit cadre auxiliaire (2) comprend au moins une traverse antérieure inférieure (5) et, à l'arrière, une traverse supérieure (6) et une traverse inférieure (7), chacune desdites traverses portant en position adjacente à ses extrémités des supports de suspension respectifs (8, 9, 10, 11, 12, 13) pour l'installation sur la carrosserie (1).

5. Véhicule automobile selon l'une quelconque des revendications précédentes, **caractérisé en ce que** lesdits supports de suspension sont d'un type choisi parmi : supports d'amortissement de vibrations traditionnels en caoutchouc, supports d'amortissement hydrauliques, supports de suspension adaptatifs conçus pour fonctionner selon différentes caractéristiques élastiques et d'amortissement, et supports de suspension actifs à commande électrique qui peuvent être ajustés de manière continue pour adopter un nombre infini de différentes caractéristiques possibles élastiques et d'amortissement.

6. Véhicule automobile selon la revendication 1, **caractérisé en ce que** le cadre auxiliaire précité (2) est constitué de deux ou plusieurs sous-cadres joints ensemble.

7. Véhicule automobile selon la revendication 6, **caractérisé en ce que** les sous-cadres sont joints ensemble au moyen de vis.

8. Véhicule automobile selon la revendication 1, **caractérisé en ce que** le cadre auxiliaire précité (2) est préalablement agencé pour recevoir sur lui-même l'unité à moteur et l'unité de suspension avant d'être monté sur la carrosserie du véhicule automobile.

9. Véhicule automobile selon la revendication 6, **caractérisé en ce que** l'un des sous-cadres précités est préalablement agencé pour recevoir sur lui-même l'unité à moteur et l'unité de suspension avant d'être monté sur la carrosserie du véhicule automobile.
